(19) Europäisches Patentamt
European Patent Office
Office européen des brevets

(11) **EP 1 157 137 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(21) Anmeldenummer: **00909237.0**

(22) Anmeldetag: **23.02.2000**

(51) Int Cl.⁷: **C21B 13/14**, C21B 13/00

(86) Internationale Anmeldenummer:
**PCT/EP2000/001463**

(87) Internationale Veröffentlichungsnummer:
**WO 2000/052214 (08.09.2000 Gazette 2000/36)**

(54) **VERFAHREN ZUR MODELLIERUNG EINES REDUKTIONSVERFAHRENS**

METHOD FOR MODELLING A REDUCTION PROCESS

PROCEDE DE MODELER UN PROCEDE DE REDUCTION

(84) Benannte Vertragsstaaten:
**DE GB IT LU**

(30) Priorität: **03.03.1999 AT 36199**

(43) Veröffentlichungstag der Anmeldung:
**28.11.2001 Patentblatt 2001/48**

(73) Patentinhaber: **Voest-Alpine Industrieanlagenbau GmbH & Co.
4031 Linz (AT)**

(72) Erfinder:
• **ZEISEL, Helmut
A-4040 Linz (AT)**
• **AICHINGER, Georg
A-4481 Asten (AT)**
• **WURM, Johann
A-4283 Bad Zell (AT)**
• **DRUCKENTHANER, Hermann
A-4030 Linz (AT)**
• **ENGL, Heinz
A-4040 Linz (AT)**
• **SCHATZ, Andrea
A-4312 Ried i. R. (AT)**
• **GÖKLER, Gerald
A-4540 Bad Hall (AT)**

(74) Vertreter: **VA TECH Patente GmbH & Co
Penzinger Strasse 76
1141 Wien (AT)**

(56) Entgegenhaltungen:
**DE-A- 2 835 548**

• **DRUCKENTANNER H ET AL: "AUTOMATION OF BLAST FURNACE - AN EFFECTIVE MEANS OF MAXIMIZING EFFICIENCY IN SMELTING" METALLURGIST,US,CONSULTANTS BUREAU. NEW YORK, Bd. 41, Nr. 12, 1. Dezember 1997 (1997-12-01), Seiten 433-434, XP000771486 ISSN: 0026-0894**
• **PATENT ABSTRACTS OF JAPAN vol. 012, no. 312 (C-523), 24. August 1988 (1988-08-24) & JP 63 083210 A (NIPPON KOKAN KK), 13. April 1988 (1988-04-13)**
• **DRUCKENTHANER H ET AL: "BLAST FURNACE AUTOMATION FOR MAXIMISING PRODUCTION ECONOMY" STEEL TIMES INTERNATIONAL,GB,FMJ INTERNATIONAL PUBLICATIONS, REDHILL, SURREY, ENGLAND, Bd. 21, Nr. 1, 1. Januar 1997 (1997-01-01), Seiten 16-18, XP000683092 ISSN: 0143-7798**
• **DATABASE WPI Section Ch, Week 199704 Derwent Publications Ltd., London, GB; Class M24, AN 1997-038190 XP002140428 & JP 08 295910 A (SUMITOMO METAL IND LTD), 12. November 1996 (1996-11-12)**
• **SUKHANOV E L: "MODEL OF THE THERMAL REGIME OF BLAST-FURNACE SMELTING" STEEL IN TRANSLATION,GB,THE INSTITUTE OF MATERIALS, LONDON, Bd. 27, Nr. 8, 1. Januar 1997 (1997-01-01), Seiten 15-18, XP000779717 ISSN: 0967-0912**
• **PATENT ABSTRACTS OF JAPAN vol. 004, no. 089 (C-016), 25. Juni 1980 (1980-06-25) & JP 55 054515 A (ISHIKAWAJIMA HARIMA HEAVY IND CO LTD), 21. April 1980 (1980-04-21)**

**Beschreibung**

Die Erfindung betrifft ein Verfahren zur modellierung eines Reduktionsverfahrens für eisenhältige stückige Einsatzstoffe in form einer schüttung modellierung in einem Reduktionsschacht, dem, beispielsweise aus einem Einschmelzvergaser, Reduktionsgas zugeführt wird, wobei ein festes reduziertes Produkt, beispielsweise Eisenschwamm, für die Herstellung von flüssigem Roheisen oder flüssigen Stahlvorprodukten aus dem Reduktionsschacht entnommen wird.

Der Reduktionsschacht kann beispielsweise der Schacht eines Direktreduktionsverfahrens oder die Vorreduktionsstufe in fester Phase eines Schmelzreduktionsverfahrens sein. Bei letzterem werden bei der Herstellung von flüssigem Roheisen oder flüssigen Stahlvorprodukten die Einsatzstoffe, wie Eisenerz, vorzugsweise in Stück- oder Pelletform, gegebenenfalls mit Zuschlägen, in einem Reduktionsschacht direkt zu Eisenschwamm reduziert, dieser wird in eine Einschmelzvergasung chargiert und dort unter Zufuhr von Kohlenstoffträgern und sauerstoffhältigem Gas erschmolzen. Dabei wird ein CO- und $H_2$-hältiges Reduktionsgas erzeugt, das aus der Einschmelzvergasung abgezogen und in den Reduktionsschacht eingeleitet wird, wo es umgesetzt und nach erfolgter Reduktion der eisenhältigen Einsatzstoffe als Topgas abgezogen wird.

Bei Herstellungsverfahren dieser Art ist es schwierig, das optimale Produktionsniveau abzuschätzen, da spezielle Eigenschaften der Einsatzmaterialien, wie Festigkeit, Zerfallsneigung bei der Reduktion, Agglomeratbildung, und der Reduktionsmittel die Produktion beeinflussen.

Neue Anlagen werden auch heute noch unter der Voraussetzung von hoher Qualität des Rohstoffes und der Reduktionsmittel betrieben, was nicht die Angebotslage am Rohstoffsektor widerspiegelt. Engpässe in der Rohstoffversorgung und damit verbundene Produktionsausfälle sind die Folge, da die Grenzen für den Betrieb mit Rohstoffen geringerer Qualität nicht bekannt sind.

Andererseits bestehen bei der Konstruktion neuer Reduktionsschächte mit vergrößerter oder veränderter Geometrie sowie bei der Verwendung geänderter Einsatzstoffe in bestehenden Anlagen Unsicherheiten über die Auswirkungen dieser Änderungen. Insbesondere bestehen Unsicherheiten bezüglich des Materialflusses, der toten Zonen des Möllers und deren Rückwirkung auf den Gasfluss. Diese Unsicherheiten lassen sich auch mit Experimenten an realen Anlagen bzw. an maßstabsgetreuen Modellen nur zum Teil beseitigen. Man ist daher bei der Bewertung des Geometrieeinflusses des Reduktionsschachtes und der Rohstoffcharakteristik auf das Reduktionsverfahren weiterhin auf die Betriebserfahrung an bestehenden Reduktionsanlagen angewiesen, wobei insbesondere die Übertragung von Aussagen auf bisher unerprobte Geometrien oder Einsatzstoffe mit großen Risiken verbunden ist und keine objektiven bzw. quantitativen Aussagen getroffen werden können.

Bereits existierende sogenannte "Black-Box"-Modelle berücksichtigen die Vorgänge in der Reduktionsanlage bzw. im Reduktionsschacht nur unzureichend, da diese Modelle auf empirische Zusammenhänge angewiesen sind, aber keine Aussagen über die inneren Zustände des Reduktionsschachtes geben können.

Die Aufgabe der vorliegenden Erfindung besteht nun darin, in Überwindung der genannten Nachteile ein Verfahren zu entwickeln, mit dem ein Reduktionsverfahren im gesamten Reduktionsschacht quantitativ bewertet und das Reduktionsverfahren dadurch optimiert werden kann.

Diese Aufgabe wird durch Anspruch 1 gelöst.

Neu an dieser Erfindung ist, dass diese erstmals eine zwei- oder dreidimensionale quantitative Bestimmung der physikalischen und chemischen Größen im gesamten Reduktionsschacht erlaubt und somit objektivierbare Aussagen über das Reduktionsverfahren getroffen werden können, sodass durch die Verwendung dieses Simulationswerkzeuges die Konstruktion und der Betrieb neuer Anlagen sowie der Betrieb bestehender Anlagen mit geänderten Einsatzstoffen mit geringerem Risiko verbunden sind.

Für die Erstellung des Prozessmodells werden die geometrischen Abmessungen des Reduktionsschachtes, die chemischen und physikalischen Eigenschaften der einzelnen am Prozess beteiligten Stoffe, die für die Lösung der Differentialgleichungen notwendigen Randbedingungen sowie die Prozessparameter, die der Führung des Reduktionsprozesses dienen, vorgegeben.

Das Ergebnis der Berechnung des Prozessmodells liefert für jede Phase zumindest die räumliche Verteilung von Druck, Geschwindigkeit, Volumenanteil, chemische Zusammensetzung und die räumliche Temperaturverteilung im Reduktionsschacht.

Besonders vorteilhaft kann die Erfindung auf eine eingangs erwähnte Vorreduktionsstufe in fester Phase eines Schmelzreduktionsverfahrens angewendet werden, indem das mathematisch-physikalisch-chemische Prozessmodell für einen Reduktionsschacht, dem aus einem Einschmelzvergaser Reduktionsgas zugeführt wird, wobei ein festes Produkt, beispielsweise Eisenschwamm, aus dem Reduktionsschacht in den Einschmelzvergaser eingebracht wird, erstellt wird.

Die Erfindung kann umfassen dass das Prozessmodell unter Berücksichtigung der Staubablagerung und Staubredispergierung erstellt wird. Dadurch wird der Einfluss des im Reduktionsgas enthaltenen Staubes auf das Reduktionsverfahren berücksichtigt. Dies geschieht beispielsweise dadurch, dass die Staubablagerung durch Änderung des Volumsanteils des abgelagerten Staubes modelliert wird.

Da das Prozessmodell unter Berücksichtigung eines nichtlinearen Materialgesetzes der Schüttung Feststoffe erstellt wird, ermögficht dies eine wirklichkeitsnahe Beschreibung der Feststoffströmung, insbesondere dann, wenn der Feststoff als Bingham-ähnliches Fluid mit einem Yield-Kriterium, wie einem Drucker-Prager-, Von Mises- oder Tresca-Yield-Kriterium, modelliert wird. Dadurch wird das Vorhandensein einer kritischen Schubspannung eines granularen Feststoffes berücksichtigt, sodass z.B. tote Zonen berechnet werden können.

Dadurch, dass bei der Modellierung der chemischen und physikalischen Vorgänge Gleichgewichtszustände berücksichtigt werden und die Temperaturabhängigkeit berücksichtigt wird, kann das Prozessmodell noch besser auf die realen Zustände im Reduktionsschacht eingehen.

Bei der Modellierung der chemischen und physikalischen Vorgänge werden kinetische Ansätze verwendet. Durch die kinetischen Ansätze werden im Prozessmodell die chemischen und physikalischen Vorgänge über ihren Zeitablauf modelliert, was eine Nachbildung des räumlichen Reaktionsverhaltens an jedem Ort im Reduktionsschacht ermöglicht. Der Begriff kinetisch bedeutet in diesem Zusammenhang, dass ein betrachteter Vorgang mit einer bestimmten Geschwindigkeit abläuft.

Eine bevorzugte Ausführung der Erfindung sieht vor, dass die am Prozess beteiligten Stoffe im Prozessmodell einzelnen Phasen, wie z.B. der Gasphase oder mindestens einer granularen Phase oder mindestens einer Staubphase zugeordnet werden. Eine granulare Phase ist durch eine bestimmte Komgröße und durch ein bestimmtes Rohmaterial gekennzeichnet. Durch die Zuordnung zu einzelnen Phasen kann jede Phase gemäß ihren physikalischen bzw. chemischen Eigenschaften modelliert werden.

In der Folge ist vorgesehen, dass für jede Phase eine Massenbilanz dieser Phase und die entsprechenden Komponentenbilanzen erstellt werden. Daraus können der Volumenanteil und die chemische Zusammensetzung der einzelnen Phasen im Reduktionsschacht bestimmt werden.

Die Elementenanteile bestimmter chemischer Elemente, z.B. in Form von Massenanteilen, können aus den Komponentenbilanzen berechnet werden. So können beispielsweise zur Berechnung des Metallisierungsgrades die Massenanteile von Eisen aus den Komponentenanteiten, wie Massenanteile von Fe, FeO, $Fe_2O_3$ in einer oder mehrerer Phasen, berechnet werden.

Weiters ist vorgesehen, dass für die Erstellung einer Impulsbilanz und einer Energiebilanz jeweils mehrere Phasen zu einer Gruppe zusammengefasst werden, wobei die Phasen einer Gruppe das gleiche Geschwindigkeits-, Druck- und Temperaturfeld aufweisen. Dies kann in der Form geschehen, dass die Gasphase und die Phase des im Gas dispergierten Staubes einer ersten Gruppe von gasförmigen Phasen und die granularen Phasen sowie die Phase des im Feststoff abgelagerten Staubes einer zweiten Gruppe von festen Phasen zugeordnet wird, wobei für jede dieser zwei Gruppen eine entsprechende Impulsbilanz und eine Energiebilanz erstellt wird. Durch die Zusammenfassung der einzelnen Phasen in zwei Gruppen, die sodann als zwei Phasen betrachtet werden, kann die Geschwindigkeits-, Druck- und Temperaturverteilung besonders einfach erstellt werden.

Durch eine modulare Behandlung der einzelnen Vorgänge können diese vorerst getrennt betrachtet werden, wobei die Lösung der Gleichungen, insbesondere Differentialgleichungen, der einzelnen Bilanzen mit der jeweils am besten geeigneten mathematischen Methode erfolgen kann.

Um die Berechnung des Prozessmodells durchzuführen, ist vorgesehen, dass der Reduktionsschacht diskretisiert wird und die Bilanzen mit numerischen Methoden, wie z.B. Methode der finiten Differenzen, Methode der finiten Elemente, Methode der finiten Volumina oder Methode gewichteter Residuen, gelöst werden. Dadurch ist eine hinreichend genaue und für jede Bilanz passende numerische Methode verfügbar. Dabei kann die Lösung des Prozessmodells durch sukzessive Iteration der Berechnung der Bilanzen gewonnen werden.

Weiters ist vorgesehen, dass ein Teil der chemischen und/oder physikalischen Eigenschaften der am Prozess beteiligten Stoffe, insbesondere für die Modellierung der chemische Kinetik, der Staubablagerung und des Feststoffverhaltens, wie innerer Reibungswinkel und Kohäsion, aus Materialtests bestimmt wird. Dadurch wird sichergestellt, dass im Prozessmodell berücksichtigte Materialparameter mit den tatsächlichen Eigenschaften der verwendeten Materialien übereinstimmen.

Eine weitere Ausgestaltung der Erfindung besteht darin, dass zur Reduzierung der Rechenzeit durch Ausnutzung von Symmetrien die Berechnung des Prozessmodells nur für einen dreidimensionalen Teilbereich des Reduktionsschachtes erfolgt.

Weiters ist vorgesehen, dass die Geometrie des Reduktionsschachtes durch Datenübertragung aus einem CAD-Programm übernommen wird. Dadurch kann eine Änderung der Geometrie des Reduktionsschachtes im Prozessmodell mit geringem Aufwand erfolgen.

Zudem ist es von Vorteil, wenn die Ergebnisse der Berechnungen grafisch, beispielsweise als Schnittdarstellung auf einem Computerbildschirm, dargestellt werden. Dadurch wird beispielsweise das Ergebnis der Auswertung des Prozessmodells in übersichtlicher und rasch erfassbarer Form als Grundlage für weitere Maßnahmen am Reduktionsschacht zur Verfügung gestellt.

Eine erfindungsgemäße Anwendung des Verfahrens besteht darin, dass durch mehrmalige off-line-Berechnung des Prozessmodells unter Variation der Geometrie des Reduktionsschachtes eine geeignete Auslegung des Reduktionsschachtes ermittelt wird. Bei der Auslegung von neuen bzw. bei der Änderung von bestehenden Reduktionsanlagen wird auf diese Weise eine optimale Geometrie des Reduktionsschachtes ermittelt, wodurch die Betriebskapazität im Vergleich zu nicht optimierter Geometrie erhöht wird. Die Geometrie des Reduktionsschachtes kann dadurch für bestimmte Einsatzstoffe, beispielsweise für den Einsatz von stückigen Eisenerzen, angepasst werden. Weiters kann allgemein der Einfluss einer Geometrieänderung auf das Reduktionsverfahren untersucht werden. Anhand der Ergebnisse einer mehrmaligen Berechnung des Prozessmodells kann die für eine verbesserte Verfahrensführung notwendige Geometrie ermittelt werden.

Eine weitere Anwendungsmöglichkeit besteht darin, dass durch mehrmalige off-line-Berechnung des Prozessmodells unter Variation der Prozessparameter und/oder bestimmter Einsatzmaterialien und/oder der Randbedingungen das Reduktionsverfahren optimiert wird. Dadurch werden die Auswirkung von Änderungen der Schüttung, Änderungen in der Rohstoffzusammensetzung sowie Änderungen anderer Prozessparameter auf das Reduktionsverfahren untersucht. Anhand der Ergebnisse der mehrmaligen Berechnung des Prozessmodells können die für eine optimale Verfahrensführung notwendigen Prozessparameter bzw. Einsatzmaterialien ermittelt werden.

Weiters ist vorgesehen, dass durch on-line-Berechnung des Prozessmodells unter Berücksichtigung der aktuellen Prozessparameter das Reduktionsverfahren gesteuert bzw. optimiert wird. Dadurch wird es beispielsweise dem Operator in der Warte der Reduktionsanlage ermöglicht, das Reduktionsverfahren besser zu beherrschen.

Die Optimierung des Reduktionsverfahrens besteht bei minimalem Verbrauch von Rohstoff und/oder Energie in einer Maximierung des Metallisierungsgrades oder im Erreichen eines vorgegebenen Metallisierungsgrades des reduzierten Produkts. Die durchgeführten Auswertungen des Prozessmodells sind in dieser Hinsicht zu beurteilen.

Die Erfindung wird beispielhaft anhand der folgenden Figuren 1 bis 3 näher erläutert.

Fig. 1 zeigt die für die Erfindung wesentlichen Teile einer Anlage zur Durchführung eines Schmetzreduktionsverfahrens.

Fig. 2 zeigt ausgehend von der Längsachse einen Längsschnitt durch einen Reduktionsschacht.

Fig. 3 zeigt eine Draufsicht auf einen Sektor des Reduktionsschachtes.

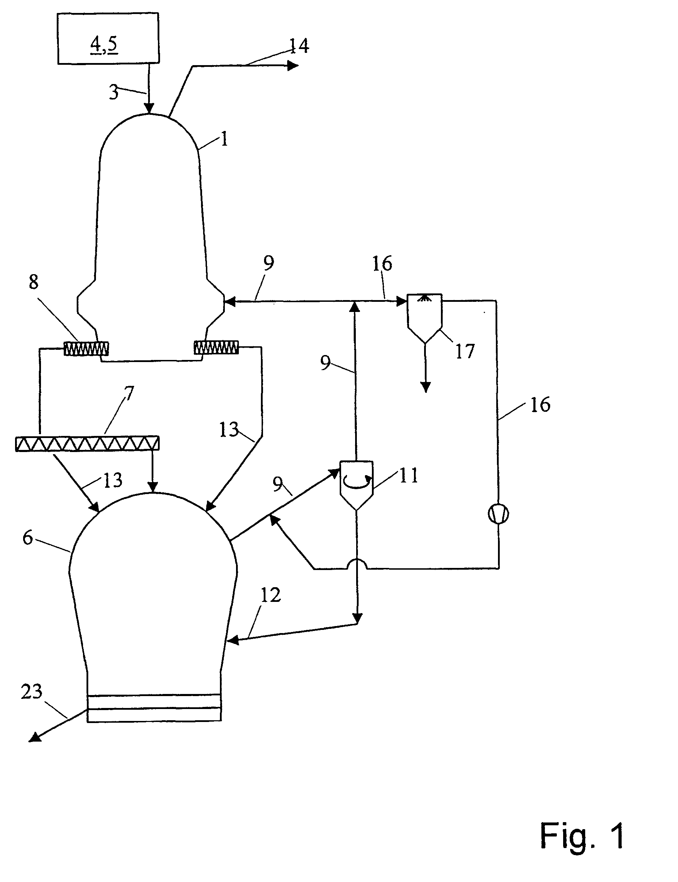

In Fig. 1 werden Eisenerz 4 und Zuschlagstoffe 5 gemeinsam gemäß Pfeil 3 in einen Reduktionsschacht 1 chargiert und nach erfolgter Reaktion wird das Produkt 13, im Wesentlichen Eisenschwamm, durch Fördereinrichtungen 8 ausgetragen und in den Einschmeizvergaser 6 geführt, dem durch eine Fördereinrichtung 7 auch Kohle zugegeben wird, wobei das erschmolzene Produkt gemäß Pfeil 23 abgezogen wird. Das im Einschmelzvergaser 6 erzeugte Reduktionsgas 9 wird in einem Zyklon 11 gereinigt, wobei die abgeschiedenen Feststoffe 12 rückgeführt werden, und anschließend in den Reduktionsschacht 1 eingebracht, wo es nach erfolgter Reaktion als Topgas 14 abgezogen wird. Ein Teil 16 des Reduktionsgases 9 wird über eine Kühl- und Reinigungseinrichtung 17 geführt und anschließend dem Reduktionsgas 9 vor dem Zyklon 11 wieder zugegeben, wodurch eine Abkühlung des Reduktionsgases 9 auf die im Reduktionsschacht 1 benötigte Temperatur erfolgt.

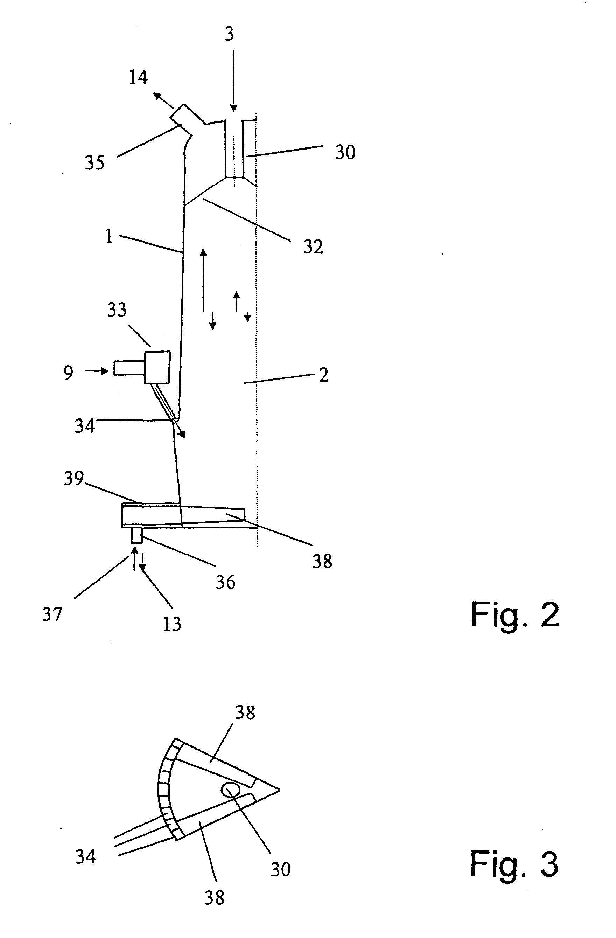

In Fig. 2 ist dargestellt, wie Rohmaterial 3, Eisenerz (z.B. mit $Fe_2O_3$ als Eisenträger) und Zuschlagstoffe, durch Spinnenbeine 30 in den Reduktionsschacht 1, im Folgenden kurz Schacht genannt, chargiert werden. In dem langsam nach unten bewegten Festbett 2, von dem der Schüttkegel 32 dargestellt ist, wird das Eisenerz chemisch zu Eisenschwamm umgewandelt. Die Festbettbewegung, dargestellt durch zwei nach unten gerichtete Pfeile, wird durch am Boden des Schachtes 1 angeordnete Förderschnecken 38, mittels derer der Eisenschwamm 13 abgezogen wird und die außerhalb des Schachtes 1 von Schneckenstutzen 39 umgeben sind, erzwungen. Durch Fallleitungen 36 wird der Eisenschwamm 13 in den Einschmelzvergaser verbracht, wobei durch diese Fallleitungen gemäß Pfeil 37 Fallrohrgas in den Schacht 1 eintreten kann. Das Reduktionsgas 9, im Folgenden kurz Gas genannt, strömt über eine mit Einströmschlitzen 34 versehene Ringleitung 33 in den Schacht 1 und gemäß den nach oben gerichteten Pfeilen im Gegenstrom zum Festbett 2 nach oben und über zwei Leitungen 35 wieder aus dem Schacht (Topgas 14). Im Gas enthaltenes Kohlenmonoxid (CO) und Wasserstoff ($H_2$) reagieren chemisch mit dem Eisenerz ($Fe_2O_3$), wodurch der Eisenschwamm (Fe) entsteht.

Fig. 3 zeigt einen Sektor des Schachtes 1 aus Fig. 2, wobei dieser Sektor ein Spinnenbein 30, das zwischen zwei Förderschnecken 38 angeordnet ist, und über den gesamten Umfang des Schachtes angeordnete Einströmschlitze 34 aufweist.

Da bei hoher Metallisierung des Eisenschwammes die Reduktionsgeschwindigkeit stark abnimmt, findet ein kleiner Teil der Reduktion im Einschmelzvergaser statt, sodass ein Metallisierungsgrad um 90% angestrebt wird.

Mit dem Eisenerz werden Zuschläge (Kalkstein, Dolomit) in den Schacht 1 chargiert, um die Roheisenentschwefelung und eine geringe Schlackenviskosität im Einschmelzvergaser 6 zu gewährleisten. Im Schacht 1 wird aus diesen Zuschlägen Kohlendioxid ausgetrieben, d.h. dem Gas 9 zugeführt, was als Entsäuerung oder Kalzinierung bezeichnet wird.

Das Rohmaterial 3 (Eisenerz, Zuschläge) wird feucht chargiert und im oberen Teil des Schachtes 1 getrocknet.

Wasser wird dem Möller 2 (= Schüttung im Schacht = Festbett) entzogen und dem Gas 9 zugeführt. Die Rohmaterialien 3 enthalten auch Inertstoffe, die nicht an den chemischen Reaktionen teilnehmen, wie die Gangart beim Eisenerz.

Das in den Schacht 1 einströmende Gas 9 enthält Staub, der im Festbett 2 zum Teil abgeschieden wird. Bereits abgeschiedener Staub kann aber durch eine hohe lokale Gasgeschwindigkeit wieder in das Gas 9 redispergiert werden.

Das Gas 9 besteht im Wesentlichen aus kohlenstoff-, wasserstoff- und sauerstoffhältigen Komponenten (Molekülen), die untereinander chemisch reagieren können, wodurch unter anderem auch fester Kohlenstoff produziert oder verbraucht wird. Daher beeinflussen diese Reaktionen den Staubgehalt im Gas 9 bzw. im Festbett 2.

Aufgrund der unterschiedlichen Eintrittstemperaturen von Gas 9 (einige hundert Grad Celsius) und Feststoff 2 (Umgebungstemperatur) in den Schacht 1 und aufgrund der Wärmetönung der physikalisch/chemischen Umwandlungsprozesse ergeben sich Temperaturunterschiede zwischen den Feststoffen 2 und Gas 9, die durch Wärmeübergang verringert werden.

Die chargierte Rohmaterialmenge wird im allgemeinen durch die Drehzahl der Förderschnecken 38 gesteuert. Die durch den Schacht 1 strömende Gasmenge wird im Wesentlichen durch Absenken des Gasdrucks oberhalb des Festbetts 2 erhöht und umgekehrt.

Ziel des Schachtbetriebs ist, den gewünschten Metallisierungsgrad des Erzes bei guter Gasausnutzung einzustellen, was bedeutet, dass ein möglichst großer Anteil des im Gas vorhandenen CO und $H_2$ im Zuge der Erzreduktion zu $CO_2$ und $H_2O$ umgesetzt wird. Daraus ergibt sich minimaler Resourcenverbrauch, maximale Wirtschaftlichkeit und minimale Umweltbelastung. Schlechte Gasausnutzung bedeutet das Gegenteil und kann auch die Nichterreichung des gewünschten Metallisierungsgrades verursachen.

Aufgrund der Randbedingungen (Chargier- und Austragsorgane, Einströmschlitze) wird der Schacht zweckmäßigerweise dreidimensional modelliert. Um die Rechenzeit zu verkürzen, wird daher im Allgemeinen nur ein Schachtsektor (z.B. 30° oder 60°) betrachtet, siehe Fig. 3 betrachtet. Dieser Sektor wird diskretisiert und die Bilanzen (Massen-, Komponenten-, Impuls- und Energiebilanzen) werden beispielsweise für jede Zelle mit geeigneten numerischen Verfahren gelöst.

Einflüsse, die eine Asymmetrie im Schacht bewirken (zeitlich und räumlich ungleichmäßige Chargierung, zum Teil verlegte Ringleitung und Einströmschlitze) können bei Betrachtung nur eines Schachtsektors durch periodische Randbedingungen oder durch hintereinander geschaltete Berechnungsläufe mit verschiedenen Randbedingungen ermittelt werden. Grundsätzlich kann aber auch der gesamte Schacht berechnet werden, wodurch längere Rechenzeiten entstehen.

Bei der Modellierung werden die Stoffe einzelnen Phasen zugeordnet. Das Gas bildet eine eigene Phase und der im Gas mitgeführte Staub und der ins Festbett abgeschiedene Staub bilden je eine eigene Phase.

Jede Kornklasse und jedes Rohmaterial (Erz, Kalkstein,...) stellt eine eigene granuläre Phase dar. Daher ist die Anzahl der granularen Phasen gleich dem Produkt der Anzahl der Rohmaterialien mal der Anzahl der Kornklassen. Z.B. bei 4 Rohmaterialien - 2 Erzsorten, Kalkstein und Dolomit - und 6 Kornklassen zwischen 0 mm und 50 mm liegen 24 granulare Phasen vor. Insgesamt liegen dann die Anzahl der granularen Phasen (z.B. 24) + zwei Staubphasen + eine Gasphase vor, also z.B. 27 Phasen vor.

In einem dreidimensionalen Modell gibt es im Allgemeinen für jede Phase

+ eine Massenbilanz,

+ m-1 Komponentenbilanzen bei m Komponenten.

+ eine vektorielle Impulsbilanz,

+ eine Zustandsgleichung und

+ eine Energiebilanz.

Jede Phase weist eine eigene Geschwindigkeit, eigenen Druck und eigene Temperatur auf. Masse, Impuls und Wärme werden zwischen den Phasen ausgetauscht. Daraus folgen für jede Phase

→ Volumenanteil der Phase,

→ Komponentenanteile innerhalb der Phase

→ Geschwindigkeit in drei Richtungen,

→ Druck und

→ Temperatur

Aber nur bei der Berechnung der Volumenanteile und der Komponentenanteile innerhalb der einzelnen Phasen ist diese strenge Vorgangsweise absolut notwendig. Die Berücksichtigung von Diffusion in den granularen Phasen und in den Staubphasen ist möglich, aber nicht erforderlich.

Für die Impuls- und Energiebilanzen werden zweckmäßigerweise mehrere Phasen zu Phasengruppen zusammengefasst. Z.B. umfasst eine Gruppe alle granutaren Phasen und die in der Schüttung abgelagerte Staubphase, und eine weitere Gruppe umfasst die Gasphase und die im Gas dispergierte Staubphase. In diesem Fall weisen alle granularen Phasen und die in der Schüttung abgelagerte Staubphase ein gemeinsames Geschwindigkeits-, Druck- und Temperaturfeld auf. Davon verschieden ist das gemeinsame Geschwindigkeits-, Druck- und Temperaturfeld der Gasphase und der im Gas dispergierten Staubphase.

Im Folgenden wird die Modellbildung für die einzelnen Phasen beschrieben. Die Bilanzen werden von einem raumfesten Koordinatensystem aus betrachtet (Euler'sche Betrachtungsweise). Massen-, Impuls- und Energieströme, Quellen und Senken von Masse und

Energie sowie äußere Kräfte werden pro Zellenvolumen betrachtet.

Die Massenbilanz einer Phase q um eine beliebige Gitterzelle im Reduktionsschacht ist:

- Die zeitliche Änderung der Massendichte einer beliebigen Phase q (Gas, granular, Staub) +
- die Summe aller konvektiven Massenströme, die in die und aus der Zelle treten =
- der Summe aller Massenquellen und -senken der Phase q in einer Zelle.

$$\frac{\partial(\varepsilon_q \, \rho_q)}{\partial t} \; + \; \vec{\nabla} \cdot (\varepsilon_q \, \rho_q \, \vec{v_q}) \; = \; \sum_{p=1}^{N} \dot{m}_{pq} \qquad\qquad (1)$$

mit

$\varepsilon_q$ \qquad Volumenanteil der Phase q [-]

$\rho_q$ \qquad Dichte der Phase q [$kg/m^3$]

$\vec{v}_q$ \qquad Geschwindigkeit der Phase q [m/s]

$\dot{m}_{pq}$ \qquad Massenstrom aus der Phase p in die Phase q [$kg/(m^3 \, s)$]

$\vec{\nabla}$ \qquad Nabla Operator in Vektorform $[\frac{\partial}{\partial x};\frac{\partial}{\partial y};\frac{\partial}{\partial z}]$ [1/m]

N \qquad Anzahl der Phasen

t \qquad Zeit [s]

Die Komponentenbilanz einer Komponente I in einer beliebigen granularen oder Staubphase q (nicht Gasphase) um eine beliebige Gitterzelle im Reduktionsschacht ist:

- Die zeitliche Änderung der Massendichte einer Komponente I (z.B. $Fe_2O_3$, CaO etc.) in einer Phase q (granular oder Staub) +

- die Summe aller konvektiven Massenströme einer Komponente I, die in die und aus der Zelle treten =

- der Summe aller Massenquellen und -senken der Komponente I in der Phase q.

$$\frac{\partial(\varepsilon_q \, \rho_q \, m_{ql})}{\partial t} \; + \; \vec{\nabla} \cdot (\varepsilon_q \, \rho_q \, \vec{v}_q \, m_{ql}) \;=\; \sum_{p=1}^{N} \dot{m}_{pql} \tag{2}$$

mit

$\varepsilon_q$      Volumenanteil der Phase q [-]

$\rho_q$      Dichte der Phase q [kg/m$^3$]

$m_{ql}$      Massenanteil der Komponente I in der Phase q [-]

$\vec{v}_q$      Geschwindigkeit der Phase q [m/s]

$\dot{m}_{pql}$      Massenstrom der Komponente I aus der Phase p in die Phase q [kg/(m$^3$ s)]

$\vec{\nabla}$      Nabla Operator in Vektorform $[\frac{\partial}{\partial x};\frac{\partial}{\partial y};\frac{\partial}{\partial z}]$ [1/m]

N      Anzahl der Phasen

t      Zeit [s]

Bei der Komponentenbilanz der Gasphase g um eine beliebige Gitterzelle im Reduktionsschacht kann es sinnvoll sein, einen Diffusionsstrom zu berücksichtigen, z. B. dann wenn die Vermischung zwischen Reduktionsgas und Fallrohrgas berechnet werden soll. Im Allgemeinen ist die Berücksichtigung eines Diffusionsstromes nicht unbedingt erforderlich:

- Die zeitliche Änderung der Massendichte einer Komponente I (z.B. CO, H$_2$ etc.) in der Gasphase g +

- die Summe aller konvektiven Massenströme einer Komponente I, die in die und aus der Zelle treten =

- Diffusionsstrom der Komponente I +

- der Summe aller Massenquellen und -senken der Komponente I in der Gasphase g.

$$\frac{\partial(\varepsilon_q \, \rho_q \, m_{gl})}{\partial t} \; + \; \vec{\nabla} \cdot (\varepsilon_q \, \rho_g \, \vec{v}_g \, m_{gl}) \;=\; \vec{\nabla} \cdot (\varepsilon_g \, \rho_g \, D_{g,l} \; \vec{\nabla} m_{gl}) \; + \; \sum_{p=1}^{N} \dot{m}_{pgl} \tag{3}$$

mit

$\varepsilon_g$      Volumenanteil der Gasphase g [-]

$\rho_g$      Dichte der Gasphase g [kg/m$^3$]

$m_{gl}$      Massenanteil der Komponente I in der Gasphase g [-]

$\vec{v}_g$      Geschwindigkeit der Gasphase g [m/s]

$\dot{m}_{pgl}$      Massenstrom der Komponente I aus der Phase p in die Gasphase g [kg/(m$^3$ s)]

$D_{gl}$      Diffusions- oder Dispersionskoeffizient der Komponente I in der Gasphase g [kg/(m$^3$ s)]

$\vec{\nabla}$      Nabla Operator in Vektorform $[\frac{\partial}{\partial x};\frac{\partial}{\partial y};\frac{\partial}{\partial z}]$ [1/m]

N      Anzahl der Phasen

t       Zeit [s]

Elementenbilanzen müssen nicht aufgestellt werden. Zur Überprüfung (z.B. der Metallisierung) werden aus den Komponentenanteilen (z.B. Massenanteile von Fe, FeO, $Fe_2O_3$ in einer oder mehrerer Phasen) Elementenanteile (z.B. Massenanteile von Fe, O) berechnet.

Die Impulsbilanzen werden nicht unbedingt individuell für jede Phase, sondern können auch für Gruppen von Phasen erstellt. Z. B. sind folgende Phasengruppen für die Impulsbilanzen sinnvoll:

Gruppe q       umfasst die Summe aller granularen Phasen und die in der Schüttung abgelagerte Staubphase,

Gruppe g       umfasst die Gasphase und die im Gas dispergierte Staubphase.

Die vektorielle Impulsbilanz für die Gruppe aller granularen Phasen und der in der Schüttung abgelagerten Staubphase ist:

- Die zeitliche Änderung der Impulsdichte der granutaren Phasen und der in der Schüttung abgelagerten Staubphase in einer Zelle +

- der Summe aller konvektiven Impulsströme der granularen Phase und der in der Schüttung abgelagerten Staubphase aus und in eine Zelle +

- Impulsstromquellen und -senken, die eine Konsequenz von Massenquellen und - senken in den granularen Phasen und in der in der Schüttung abgelagerten Staubphase sind

- der Auftriebskraft durch die kontinuierliche Phase (Gas) +

- der Druckkraft der granularen Phasen und der Staubphase in der Schüttung auf die Zelle +

- Kräfte aufgrund von Schubspannungen und Normalspannungen (Spannungsdeviator) +

- der Gravitationskraft +

- der Widerstandskraft zwischen Gas und den Feststoffen durch die Haftung des Gases an der Feststoffoberfläche.

$$\varepsilon_q \, \rho_q \frac{D\vec{v_q}}{Dt} \;=\; -\,\varepsilon_q \, \vec{\nabla} p_g \;-\; \vec{\nabla} p_q \;+\; \vec{\nabla} \cdot \vec{\tau_q} \;+\; \varepsilon_q \, \rho_q \, \vec{g} \;+\; K_{gq} \cdot (\vec{v_g} - \vec{v_q}) \qquad\qquad (4) \quad .$$

mit

$\varepsilon_q$       Volumenanteil der granularen Phasen und der in der Schüttung abgelagerten Staubphase [-]

$\rho_q$       Dichte der granularen Phasen und der in der Schüttung abgelagerten Staubphase [$kg/m^3$]

$\vec{v}_q$       Geschwindigkeit der granularen Phasen und der in der Schüttung abgelagerten Staubphase [m/s]

$\vec{v}_g$       Geschwindigkeit der Gasphase und der im Gas dispergierten Staubphase g [m/s]

$p_g$       Druck der Gasphase und der im Gas dispergierten Staubphase g [Pa]

$p_q$       Druck der granularen Phasen und der in der Schüttung abgelagerten Staubphase ("Schüttdruck") [Pa]

$\vec{\tau}_q$       Spannungsdeviator der granularen Phasen und der in der Schüttung abgelagerten Staubphase [Pa]. Enthält als Parameter den inneren Reibungswinkel und Kohäsion.

$\vec{g}$       Vektor der Gravitationsbeschleunigung [$m/s^2$]

$K_{gq}$   Koeffizient des Impulsaustausches zwischen der granularen Phasen und der in der Schüttung abgelagerten Staubphase q einerseits und der Gasphase und der im Gas dispergierten Staubphase g andererseits (wird aus Ergun Gleichung abgeleitet)

$\vec{\nabla}$   Nabla Operator in Vektorform $[\frac{\partial}{\partial x};\frac{\partial}{\partial y};\frac{\partial}{\partial z}]$ [1/m]

D/Dt   totales Differential

t   Zeit [s]

Die Impulsbilanz für die Gruppe der Gasphase und der Staubphase im Gas g unterscheidet sich formal von der Impulsbilanz der granularen Phasen und der in der Schüttung abgelagerten Staubphase q nur durch den Wegfall der Auftriebskraft:

- Die zeitliche Änderung der Impulsdichte der Gasphase und der im Gas dispergierten Staubphase in einer Zelle +

- der Summe aller konvektiven Impulsströme der Gasphase und der im Gas dispergierten Staubphase aus und in eine Zelle +

- Impulsstromquellen und -senken, die eine Konsequenz von Massenquellen und - senken in der Gasphase und der im Gas dispergierten Staubphase sind =

- der Druckkraft der Gasphase und der im Gas dispergierten Staubphase auf die Zelle +

- Kräfte aufgrund von Schubspannungen und Normalspannungen (Spannungsdeviator) +

- der Gravitationskraft +

- der Widerstandskraft zwischen Gas und den Feststoffen durch die Haftung des Gases an der Feststoffoberfläche.

$$\varepsilon_g\,\rho_g\,\frac{D\vec{v_g}}{Dt} \;=\; -\,\varepsilon_g\,\vec{\nabla}p_g \;+\; \vec{\nabla}\cdot\vec{\vec{\tau_g}} \;+\; \varepsilon_g\,\rho_g\,\vec{g} \;+\; K_{qg}\cdot(\vec{v_q}-\vec{v_g}) \tag{5}$$

mit

$\varepsilon_g$   Volumenanteil der Gasphase und der im Gas dispergierten Staubphase [-]

$\rho_g$   Dichte der Gasphase und der im Gas dispergierten Staubphase [kg/m$^3$]

$\vec{v}_q$   Geschwindigkeit der granularen Phasen und der in der Schüttung abgelagerten Staubphase [m/s]

$\vec{v}_g$   Geschwindigkeit der Gasphase und der im Gas dispergierten Staubphase g [m/s]

$p_g$   Druck der Gasphase und der im Gas dispergierten Staubphase g [Pa]

$\vec{\vec{\tau_g}}$   Spannungsdeviator der Gasphase und der im Gas dispergierten Staubphase [Pa]

$\vec{g}$   Vektor der Gravitationsbeschleunigung [m/s$^2$]

$K_{qg}$   Koeffizient des Impulsaustausches zwischen der granularen Phasen und der in der Schüttung abgelagerten Staubphase q einerseits und der Gasphase und der im Gas dispergierten Staubphase g andererseits (wird aus Ergun Gleichung abgeleitet)

$\vec{\nabla}$   Nabla Operator in Vektorform $[\frac{\partial}{\partial x};\frac{\partial}{\partial y};\frac{\partial}{\partial z}]$ [1/m]

D/Dt   totales Differential

t        Zeit [s]

Als Beispiel werden die Energiebilanzen wieder für die unter den Impulsbilanzen erwähnten beiden Phasengruppen angeführt:

Gruppe q      umfasst die Summe aller granularen Phasen und die in der Schüttung abgelagerte Staubphase,
Gruppe g      umfasst die Gasphase und die im Gas dispergierte Staubphase.

Die Energiebilanz für die Gruppe aller granularen Phasen und den Staub in der Schüttung lautet:

- Die zeitliche Änderung der Enthalpiedichte der granularen Phasen und der in der Schüttung abgelagerten Staubphase in einer Zelle +

- der Summe aller konvektiven Enthalpieströme der granularen Phasen und der in der Schüttung abgelagerten Staubphase aus und in eine Zelle =

- Wärmeleitungsstrom durch granulare Phasen und der in der Schüttung abgelagerten Staubphase +

- Wärmeübergangsstrom auf alle granulare Phasen und die in der Schüttung abgelagerten Staubphase +

- Enthalpiequellen und -senken, die eine Konsequenz von Massenquellen und -senken der Komponenten in den granularen Phasen und in der Staubphase der Schüttung sind.

$$\frac{\partial(\varepsilon_q \rho_q h_q)}{\partial t} + \vec{\nabla} \cdot (\varepsilon_q \rho_q \vec{v}_q h_q) = - \vec{\nabla} \cdot (\varepsilon_q \lambda_q \vec{\nabla} T_q) + H_{gq}(T_g - T_q) + \sum_{p=1}^{N} \sum_{l=1}^{M} \dot{m}_{pql} h_l \qquad (6)$$

$\varepsilon_q$        Volumenanteil der granularen Phasen und der in der Schüttung abgelagerten Staubphase q [-]

$\rho_q$        Dichte der granularen Phasen und der in der Schüttung abgelagerten Staubphase q [kg/m$^3$]

$h_q$        Enthalpie der granularen Phasen und der in der Schüttung abgelagerten Staubphase q [J/kg]

$\vec{v}_q$        Geschwindigkeit der granularen Phasen und der in der Schüttung abgelagerten Staubphase [m/s]

$\lambda_q$        Wärmeleitfähigkeit der Phasengruppe q [W/(m K)]

$H_{gq}$        Wärmeaustauschkoeffizient zwischen den beiden Phasengruppen [W/K]

$T_q$        Temperatur der granularen Phasen und der in der Schüttung abgelagerten Staubphase q [K]

$T_g$        Temperatur der Gasphase und der im Gas dispergierten Staubphase g [K]

N        Anzahl der Phasen

M        Anzahl der Komponenten

$\dot{m}_{pql}$        Massenstrom der Komponente l aus der Phase p in die Phase q [kg/(m$^3$ s)]

$h_l$        Enthalpie der Komponente l [J/kg]

$\vec{\nabla}$        Nabla Operator in Vektorform [$\frac{\partial}{\partial x}; \frac{\partial}{\partial y}; \frac{\partial}{\partial z}$] [1/m]

t        Zeit [s]

Die Energiebilanz für die Gruppe der Gasphase und der im Gas dispergierten Staubphase ist formal gleich wie für die Gruppe der granularen Phasen und der in der Schüttung abgelagerten Staubphase. Man erhält sie durch Ersetzen des Index q durch g.

Die Volumenanteile der granularen. Phasen können entweder im gesamten Berechnungsraum (Schachtsektor) vorgegeben oder vorteilhafter aus Zustandsgleichungen bestimmt werden, siehe z.B. N. Ouchiyama und T. Tanaka 1988 "Porosity Estimations of Mixed Assemblages of Solid Particles with Different Packing Characteristics", Journal of Chemical Engineering of Japan, 21(2):157-163 oder Johansen S.T., Laux H. "An Alternative Method for Numerical Solution of Dispersed Multiphase Flow Equations", Proceedings of the 2nd International Conference of Multiphase Flow", Kyoto, Japan 1995. Die Volumentanteile der Staubphasen ergeben sich aus der Massenbilanz der Staubphasen. Damit ist auch der Volumenanteil der Gasphase festgelegt, denn die Summe der Volumenanteile aller Phasen in einer Zelle ist gleich Eins.

Die Widerstandskraft in den Impulsbilanzen kann aus allen bekannten Gleichungen, durch welche vorteilhaft die Strömung von Gas durch poröses Medium modelliert werden kann, abgeleitet werden, z.B. durch die Ergungleichung, siehe z.B. "Fluid flow through packed columns", Sabri Ergun, 1952, Chemical Engineering Progress, 48(2): 89-94. Der Einfluss von Entmischung, Staubablagerung und Hohlräumen auf die Gasströmung werden durch Stoffwerte erfasst, wie:

→  örtlicher Volumenanteil der granularen Phasen und der in der Schüttung abgelagerten Staubphase

→  örtlicher mittlerer Partikeldurchmesser und

→  örtlicher Formfaktor

Die Auswirkung von Temperatur, Staubströmung und chemischen Reaktionen auf die Feststoffströmung wird durch durch geeignete Parameter in den Impulsbilanzen der festen Phasen erfasst, wie z.B. durch den inneren Reibungswinkel und die Kohäsion. Damit können Phänomene wie Kernfluss bzw. Bildung toter Zonen zwischen den Austragsorganen (z.B. Förderschnecken) oder Brückenbildung berechnet werden. Durch die Abhängigkeit dieser Parameter von örtlichen Zuständen wie z.B. Temperatur, Staubvolumenanteil, Schwefel-Gehalt, können auch anormale Schachtzustände berechnet werden, die durch "Sticking", "Agglomeration" oder "Clustering" (= Aneinanderhaften von Partikeln aufgrund chemischer Bindung, wie Fe-Fe- oder Fe-S-Bindung, oder aufgrund einer zwischen Partikeln vorhandenen flüssigen Phase) verursacht werden.

Der Einfluss von Entmischung kann näherungsweise über die Randbedingungen berücksichtigt werden (Setzen einer Korngrößenverteilung mit erhöhtem Feinanteil im Spinnenbein). Swelling (=Volumszunahme von Partikeln während der Reduktion) kann näherungsweise durch Angabe einer geringen Dichte von FeO abgeschätzt werden. Der Einfluss von Kornzerfall und Abrieb wird über geeignete Quell-Senk-Terme in den Massenbilanzen der groben granularen Phasen berücksichtigt.

Im Folgenden wird auf die Zusammensetzung der Phasen eingegangen. Jede Phase enthält Komponenten, die an bestimmten physikalisch/chemischen Umwandlungsprozessen teilnehmen. Alle festen Komponenten, die an keiner physikalisch-chemischen Umwandlung teilnehmen (Gangart bzw. $Al_2O_3$, $SiO_2$, etc. ), können als eine Inertstoffkomponente zusammengefasst werden. Z.B. ist folgende Zusammensetzung von Gasphase, Staubphasen bzw. granularen Phasen sinnvoll:

| | |
|---|---|
| Gas | $CO$, $CO_2$, $H_2$, $H_2O(g)$, $CH_4$, $N_2$ |
| Erz1 und Erz2 | $Fe_2O_3$, $FeO$, $Fe$, $H_2O(I)$, Inertstoffe |
| Kalkstein, Dolomit | $MgCO_3$, $MgO$, $CaCO_3$, $CaO$, $H_2O(I)$, Inertstoffe |
| Staub im Gas | $C$, Inertstoffe |
| Staub im Festbett | $C$, Inertstoffe |

Die Modellgleichungen gelten auch, wenn z.B. noch mehr Komponenten im Staub oder zusätzliche Komponenten wie $H_2S$ oder Cyanide berücksichtigt werden. Nur die Rechenzeit wird entsprechend länger.

In den Quell-/Senktermen der angeführten Bilanzgleichungen sind physikalisch/chemische Umwandlungsprozesse berücksichtigt wie z.B.

• Trocknung aller granularen Phasen

• Erzreduktion mit CO und $H_2$ in mehreren Stufen (Hämatit - Magnetit - Wüstit - Eisen), wobei schnelle Reduktionsstufen wie z.B. die Magnetitstufe übersprungen werden können.

• Kalzinierung von Kalkstein und Dolomit

- Chemische Reaktionen im System C-H-O: Boudouard-Reaktion, homogene und heterogene Wassergasreaktion, Methanzerfallsreaktionen

- Staubabscheidung/Staubredispergierung: Abscheidung des im Gas enthaltenen Staubes in das Festbett bzw. Redispergierung des im Festbett enthaltenen Staubes in das Gas

- Komzerfall, Abrieb

Als Beispiel sei die Bilanzierung der Komponente "Kohlenmomoxid" (CO) angeführt. CO kommt nur in der Gasphase vor. Quell/Senkterme in der CO Bilanz entstehen durch Erzreduktion und durch chemische Reaktionen im System C-H-O wie z.B. der Boudouard Reaktion. In der CO-Bilanz mitbeteiligte Phasen sind damit alle Erz- und Staubphasen.

Die Quellen und Senken in den Bilanzen können beliebig modelliert werden. Besonders vorteilhaft werden sie aus einem Potential (z.B. Abstand zum thermodynamischen Gleichgewicht) und einem Geschwindigkeitsterm (z. B. Arrhenius-Koeffizient, Produktschichtdiffusions-Koeffizient, Stoffübergangs-Koeffizient) zusammengesetzt. Die Quellen und Senken können weiters beispielsweise in Abhängigkeit von der Temperatur T erstellt werden, also für verschiedene Temperaturbereiche verschiedene Form haben oder erst ab einer bestimmten Temperatur wirksam werden. Bei Feststoffen wird der Formfaktor und der mittlere Korndurchmesser in die Berechnung der Quellen und Senken mit einbezogen. Bei der Staubablagerung / Staubredispergierung ist der maximal mögliche Staubvolumenanteil in der Schüttung ausschlaggebend, der abhängig ist von der Korngrößenverteilung der Schüttung und der lokalen Gasgeschwindigkeit. Staubablagerung erfolgt dann, wenn der Volumenanteil des abgeschiedenen Staubes kleiner als dessen Gleichgewichtswert ist, die Staubredispergierung findet statt, wenn der Volumenanteil des abgeschiedenen Staubes größer als dessen Gleichgewichtswert ist.

Für die Formulierung der Quellen und Senken der chemischen Vorgänge werden übliche Parameter verwendet, wie z.B. Reaktionsordnung bezüglich des Umsatzes und stöchiometrische Koeffizienten.

Aufgrund der Dominanz der Wärmetönungen der chemisch Reaktionen und um Rechenzeit zu sparen, wurden bei den Energiebilanzen die mechanische Arbeit und die Energiedissipation durch Reibung nicht berücksichtigt. Die Ergebnisse würden sich dadurch nicht wesentlich ändern.

Die Lösung der Modellgleichungen erfordert Randbedingungen. Diese können gemäß eines bestehenden oder gewünschten Mess- und Regelschemas aufgestellt werden. Wenn z.B. im Betrieb der Druck im Reduktionsgas und im Fallrohrgas und die Topgasmenge gemessen werden, so werden im mathematischen Modell Druckrandbedingungen an den Einlässen des Fallrohrgas und des Reduktionsgas und eine Geschwindigkeitsrandbedingung für die Gasphase an der Mölleroberfläche gesetzt.

Durch geeignet gewählte Randbedingungen können auch komplizierte Anlagenteile, wie z.B. Austragsorgane modelliert werden. Dazu braucht nicht die exakte Geometrie und die Bewegung des Austragsorgans modelliert werden, sondem es wird das Abzugsverhalten in Form einer Geschwindigkeitsrandbedingung modelliert. Z.B. der Austrag des Möllers 2 kann durch eine Geschwindigkeitsrandbedingung am Austragsorgan erfolgen (z.B. an der Schneckenumhüllenden = gedachter Zylinder um Windungen der Förderschnecke 38). Dadurch braucht die Schneckenbewegung selbst nicht modelliert werden.

Die Randbedingungen müssen nicht auf Werte beschränkt sein, sondern es können auch Profile von Druck, Geschwindigkeit, Temperatur, Massen- und Volumenanteilen vorgegeben werden. Durch periodische Randbedingungen können auch asymmetrische Bedingungen in einem Schachtsektor nachvollzogen werden.

Die Bilanzgleichungen und Randbedingungen enthalten Stoffwerte und Parameter, die einerseits der Standardliteratur entnehmbar sind wie z.B. Molmassen, Reindichten, Wärmekapazitäten, Wärmeleitfähigkeit der Feuerfestauskleidung; und andererseits experimentell ermittelt werden müssen, wie z.B. die inneren Reibungswinkel, reduktionskinetische Parameter, Abzugscharakteristik der Austragsorgane. Dadurch wird eine rohstoff- und anlagenspezifische Berechnung des Schachtbetriebszustandes ermöglicht.

Um eine realistische Beschreibung der Feststoffströmung zu gewährleisten, muss besonderes Augenmerk auf das zur Bestimmung des Spannungsdeviatoren bzw. Spannungstensors benötigte Materialgesetz gelegt werden. Am einfachsten anzuwenden wäre das in der Strömungsmechanik standardmäßig verwendete lineare Materialgesetz für "Newtonsche Flüssigkeiten". Damit ist man aber nicht in der Lage, Phänomene wie Schüttkegel oder tote Zonen, die bei granularen Materialien auftreten, zu beschreiben. Dafür müssen nichtlineare Materialgesetze herangezogen werden.

Das für dieses Verfahren entwickelte Materialgesetz für die granulare Strömung, das Spannungstensor und Geschwindigkeitsgradienten in Verbindung setzt, ist eine Verallgemeinerung des klassischen Bingham-Materiatgesetzes ("Flows of Materials with Yield", T. C. Papanastasiou, 1987, Journal of Rheology 31 (5), 385-404). "Bingham-Fluide" sind üblicherweise Materialien mit konstanter kritischer Schubspannung, deren Materialgesetz erst dann Bewegung zulässt, wenn die tatsächlich vorherrschende Schubspannung die kritische Schubspannung überschreitet. Diese kritische Schubspannung tritt auch bei granularen Medien auf, dort kann sie aber nicht als konstant angenommen werden, sondern ist abhängig von Feststoffdruck und Materialparametern, wie z.B. vom inneren Reibungswinkel des Materials und von der Kohäsion des Feststoffs. Die Grenze zwischen Ruhezustand und Bewegung wird deshalb z.B. durch ein Drucker-Prager-Yield-Kriterium beschrieben: "Constitutive Equations for Engineering Materials, Volume 1: Elasticity and Modelling", W. F. Chen and A. F. Saleeb, 1994, Elsevier, Amsterdam [u.a.] und "Phenomenological models of viscoplastic, thixotropic, and granular materials", A. Berker and W. E. VanArsdale, 1992, Rhelogica Acta 31, 119-138.

Die Dichte der Gasphase wird durch das ideale Gasgesetz festgelegt (unter Heranziehung der mittleren Molmasse), das für die betrachteten Gasdrücke (bis 5 bar) ausreichend ist. Die Dichte der anderen Phasen ergeben sich aus den Anteilen und Reindichten der Komponenten.

Im Stoffwert effektive Wärmeleitfähigkeit $\lambda_q$ ist auch jener Strahlungsanteil berücksichtigt, der Wärme von Partikel zu Partikel transportiert.

Durch die erfindungsgemäße Ausgestaltung des Prozessmodells können folgende Vorgänge im Reduktionsschacht bzw. Stoffeigenschaften erfasst und beschrieben werden:

- Inhomogenitäten in der Zusammensetzung des Möllers (Erz, Zuschläge) können durch mehrfache Berechnung des Prozessmodells mit unterschiedlichen Bedingungen an den Spinnenbeinen simuliert werden.

- Der Einfluss der lokalen Korngrößenverteilung auf die Gasströmung im Möller kann berücksichtigt werden.

- Die Feuchtigkeit des Möllers und die in diesem enthaltenen Inertstoffe werden berücksichtigt.

- Die Auswirkung der Schachtgeometrie wie z.B. konische Erweiterungen auf die Prozesse im Schacht werden quantitativ erfasst.

- Die Geometrie der Chargier- und Austragsorgane wird berücksichtigt, wie dass der Möller über Spinnenbeine chargiert wird und über Förderschnecken, die jeweils nur einen Teil der Schachtquerschnittsfläche abdecken, entnommen wird.

- Das Gas strömt von Einströmschlitzen in der Wand des Schachtes radial nach innen.

- Die Mölleroberfläche ist als Schüttkegel ausgebildet, was Auswirkungen auf die Gasströmung hat. Das Gas tritt aufgrund der Schüttkegel bevorzugt in möglichst großem radialen Abstand von den Spinnenbeinen aus.

- Die örtliche spezifische Gasmenge hängt vom örtlichen Lückengrad, dem örtlichen mittleren Partikeldurchmesser und der örtlichen Partikelform, d.h. vom Grad der Entmischung und von der Verstaubung ab. Je kleiner der örtliche Lückengrad und der örtliche Partikeldurchmesser und je unkugeliger die örtlichen Partikel sind, desto geringer ist die örtliche spezifische Gasmenge.

- Durch Staub verlegte Teile der Ringleitung und/oder Einströmschlitze bewirken eine ungleichmäßige Durchgasung des Möllers.

- Hohe Staubfrachten können Kanalbildung (Channeling) verursachen. Gas strömt durch diese Kanäle im Möller nach oben ohne Reduktionsarbeit zu leisten. Dies kann für die Gasströmung durch Vorgabe von Anfangsbedingungen berücksichtigt werden.

- Der Wärmeübergang zwischen Gas und den Feststoffen wird berücksichtigt.

- Das Reduktionspotential des Gases wird durch chemische Reaktionen im System C-H-O verändert. Z.B. durch die Boudouard Reaktion und die heterogene Wassergasreaktion wird CO und $H_2$ in staubförmigen Kohlenstoff ($C_{(s)}$), $CO_2$ und $H_2O$ umgewandelt und ist damit verloren für die Eisenerzreduktion.

- Ein hoher örtlicher Anteil an Kalkstein und Dolomit limitiert Temperatur und verringert Reduktionspotential, da die Kalzinierung endotherm ist und $CO_2$ freigesetzt wird.

- Die lokalen spezifischen Gasmengen werden dadurch, dass das Gas von der Wand her in den Möller strömt, was eine ungleichmäßige Verteilung des Staubes im Möller ergibt, beeinflusst. Die Staubverteilung im Schacht folgt aus der Rechnung.

- Das Gas strömt nicht nur über den Weg Zyklon - Ringleitung - Einströmschlitze in den Schacht, sondern ein Teil des Reduktionsgases nimmt den Weg direkt aus dem Einschmelzvergaser über die Fallrohre in den Schacht.

- In konvergenten Schachtabschnitten (= Querschnittsverengung nach unten) und im Bereich der Förderschnecken kann Kernfluss auftreten.

- Wenn der Möller eine bestimmte Druckfestigkeit erhält - z.B. durch Sticking oder Agglomeration bzw. durch chemische Bindungen zwischen Partikeln, durch verflüssigte, wieder erstarrte Inertstoffe, durch eingelagerten Staub - können sich Brücken über den Förderschnecken bilden.

- Je höher die Temperatur im Schacht ist, desto stärker treten die für das Sticking verantwortlichen Prozesse auf (Sintern, flüssige Gangart oder flüssige Eisen-Schwefel Verbindungen). Die maximale zulässige Temperatur wird durch Stikking/Agglomeration begrenzt.

- Das Zusammenwirken
von rohstoffspezifischen Daten wie z.B. reaktionskinetische Parameter von Erzen,
von operatorspezifischen Maßnahmen wie z.B. spezifische Gasmenge,
von Geometrie- und/oder Maßstabsänderungen wie z.B. längere Austragsschnecken, und deren Auswirkung auf die Leistung des Schachtes kann quantitativ untersucht werden.

Indirekt durch das Modell berücksichtigt werden auch folgende Vorgänge, die sich vor allem aus der berechneten Druckverteilung ablesen lassen:

- Der Möller sinkt nicht gleichmäßig über den gesamten Querschnitt ab, sondern wo örtlich die Lockerungsgeschwindigkeit überschritten wird, kann der Möller "hängen". Die Lockerungsgeschwindigkeit ist jene Leerrohrgeschwindigkeit des Gases, bei der der gasseitige vertikale, spezifische Druckverlust gleich dem vertikalen Schüttdruck ist (= Produkt von Schüttdichte des Möllers mal Erdbeschleunigung, wenn die Abstützung des Möllers an der Wand bzw. ruhender Schüttung vernachlässigt wird).

- Der Betrag der Gasgeschwindigkeit beim Eintritt in den Schacht ist viel größer als die Lockerungsgeschwindigkeit. Wenn die Gaspermeabilität im Unterschacht zu gering ist, können sich ausgehend von den Einströmschlitzen Hohlräume und partielle Hänger bilden.

Durch das erfindungsgemäße Verfahren ist es möglich, dass Reduktionsverfahren und die Produktqualität durch Veränderung der Geometrie bzw. der Prozessparameter bei verschiedenen Rohstoffen zu optimieren. Dadurch kann die Palette der zum Einsatz gelangenden Rohstoffe erweitert werden.

**Patentansprüche**

1. Verfahren zur Modellierung eines Reduktionsverfahrens für eisenhältige, stückige Einsatzstoffe (3) in Form einer Schüttung in einem Reduktionsschacht (1), dem, beispielsweise aus einem Einschmelzvergaser (6), Reduktionsgas (9) zugeführt wird, wobei ein festes reduziertes Produkt (13), beispielsweise Eisenschwamm, für die Herstellung von flüssigem Roheisen oder flüssigen Stahlvorprodukten (23) aus dem Reduktionsschacht (1) entnommen wird, wobei der Reduktionsschacht (1) räumlich zwei- oder dreidimensional modelliert wird und das Reduktionsverfahren mittels eines mathematisch-physikalisch-chemischen Prozessmodells beschrieben wird, wobei im Prozessmodell ein nichtlineares Materialgesetz für die Schüttung der Feststoffe verwendet wird, wobei das nichtlineare Materialgesetz den nichtlinearen Zusammenhang zwischen Spannungstensor und Geschwindigkeitsgradienten der Strömung beschreibt, sodass Phänomene wie Schüttkegel oder tote Zonen erfasst werden können.

2. Verfahren nach Anspruch 1, **dadurch gekennzeichnet, dass** das Prozessmodell unter Berücksichtigung der Staubablagerung und Staubredispergierung erstellt wird.

3. Verfahren nach Anspruch 2, **dadurch gekennzeichnet, dass** die Staubablagerung durch Änderung des Volumsanteils des abgelagerten Staubes modelliert wird.

4. Verfahren nach Anspruch 1, **dadurch gekennzeichnet, dass** die Schüttung als Bingham-ähnliches Fluid mit einem Yield-Kriterium, wie einem Drucker-Prager-, Von Mises- oder Tresca-Yield-Kriterium, modelliert wird.

5. Verfahren nach einem der Ansprüche 1 bis 4, **dadurch gekennzeichnet, dass** bei der Modellierung der chemischen und physikalischen Vorgänge kinetische Ansätze verwendet werden.

6. Verfahren nach einem der Ansprüche 1 bis 5, **dadurch gekennzeichnet, dass** bei der Modellierung der chemischen und physikalischen Vorgänge Gleichgewichtszustände berücksichtigt werden.

7. Verfahren nach einem der Ansprüche 1 bis 6, **dadurch gekennzeichnet, dass** bei der Modellierung der chemischen und physikalischen Vorgänge die Temperaturabhängigkeit berücksichtigt wird.

8. Verfahren nach einem der Ansprüche 1 bis 7, **dadurch gekennzeichnet, dass** die am Prozess beteiligten Stoffe im Prozessmodell einzelnen Phasen, wie z.B. der Gasphase oder mindestens einer granularen Phase oder mindestens einer Staubphase zugeordnet werden.

9. Verfahren nach einem der Ansprüche 1 bis 8, **dadurch gekennzeichnet, dass** eine granulare Phase durch eine bestimmte Komgröße und durch ein bestimmtes Rohmaterial gekennzeichnet ist.

10. Verfahren nach Anspruch 8 oder 9, **dadurch gekennzeichnet, dass** für jede Phase eine Massenbilanz dieser Phase und die entsprechenden Komponentenbilanzen erstellt werden.

11. Verfahren nach Anspruch 10, **dadurch gekennzeichnet, dass** Elementenanteile bestimmter chemischer Elemente, z.B. in Form von Massenanteilen, aus den Komponentenbilanzen berechnet werden.

12. Verfahren nach einem der Ansprüche 8 bis 11, **dadurch gekennzeichnet, dass** für die Erstellung einer Impulsbilanz und einer Energiebilanz jeweils mehrere Phasen zu einer Gruppe zusammengefasst werden, wobei die Phasen einer Gruppe das gleiche Geschwindigkeits-, Druck- und Temperaturfeld aufweisen.

13. Verfahren nach Anspruch 12, **dadurch gekennzeichnet, dass** die Gasphase und die Phase des im Gas dispergierten Staubes einer ersten Gruppe von gasförmigen Phasen und die granularen Phasen sowie die Phase des im Feststoff abgelagerten Staubes einer zweiten Gruppe von festen Phasen zugeordnet wird, wobei für jede dieser zwei Gruppen eine entsprechende Impulsbilanz und eine Energiebilanz erstellt wird.

14. Verfahren nach einem der Ansprüche 10 bis 13, **dadurch gekennzeichnet, dass** der Reduktionsschacht (1) diskretisiert wird und die Bilanzen mit numerischen Methoden, wie z.B. Methode der finiten Differenzen, Methode der finiten Elemente, Methode der finiten Volumina oder Methode gewichteter Residuen, gelöst werden.

15. Verfahren nach einem der Ansprüche 1 bis 14, **dadurch gekennzeichnet, dass** ein Teil der chemischen und/oder physikalischen Eigenschaften der am Prozess beteiligten Stoffe, insbesondere für die Modellierung der chemischen Kinetik, der Staubablagerung und des Feststoffverhaltens, wie innerer Reibungswinkel und Kohäsion, aus Materialtests bestimmt wird.

16. Verfahren nach einem der Ansprüche 1 bis 15, **dadurch gekennzeichnet, dass** zur Reduzierung der Rechenzeit durch Ausnutzung von Symmetrien die Berechnung des Prozessmodells nur für einen dreidimensionalen Teilbereich des Reduktionsschachtes (1) erfolgt (Fig. 3).

17. Verfahren nach einem der Ansprüche 1 bis 16, **dadurch gekennzeichnet, dass** die Geometrie des Reduktionsschachtes (1) durch Datenübertragung aus einem CAD-Programm übernommen wird.

18. Verfahren nach einem der Ansprüche 1 bis 17, **dadurch gekennzeichnet, dass** die Ergebnisse der Berechnungen grafisch, beispielsweise als Schnittdarstellung auf einem Computerbildschirm, dargestellt werden.

19. Verfahren nach einem der Ansprüche 1 bis 18, **dadurch gekennzeichnet, dass** durch mehrmalige off-line-Berechnung des Prozessmodells unter Variation der Geometrie des Reduktionsschachtes (1) eine geeignete Auslegung des Reduktionsschachtes ermittelt wird.

20. Verfahren nach einem der Ansprüche 1 bis 18, **dadurch gekennzeichnet, dass** durch mehrmalige off-line-Berechnung des Prozessmodells unter Variation der Prozessparameter und/oder bestimmter Einsatzmaterialien und/oder der Randbedingungen das Reduktionsverfahren optimiert wird.

**21.** Verfahren nach einem der Ansprüche 1 bis 20, **dadurch gekennzeichnet, dass** durch on-line-Berechnung des Prozessmodells unter Berücksichtigung der aktuellen Prozessparameter das Reduktionsverfahren gesteuert bzw. optimiert wird.

**22.** Verfahren nach einem der Ansprüche 1 bis 21, **dadurch gekennzeichnet, dass** die Optimierung des Reduktionsverfahrens bei minimalem Verbrauch von Rohstoff und/oder Energie in einer Maximierung des Metallisierungsgrades oder im Erreichen eines vorgegebenen Metallisierungsgrades des reduzierten Produkts besteht.

**Claims**

**1.** Method of modelling a reduction process for iron-containing charge materials (3) in lump form as a feedstock in a reduction shaft (1) to which reduction gas (9) is fed, for example from a fusion gasifier (6), with a reduced solid product (13), for example iron sponge, being taken from the reduction shaft (1) for the production of liquid pig iron or liquid primary steel products (23), whereas the reduction shaft (1) is modelled in two or three spatial dimensions and the reduction process is described by means of a mathematical-physical-chemical process model, whereas in the process model a non-linear material law is used for the feedstock of the solid matter, whereas the non-linear material law describes the non-linear relationship between the stress tensor and the velocity gradient of the material flow so that phenomena such as tapered tips of feedstock or dead zones can be described.

**2.** Method according to Claim 1, **characterized in that** the process model is created with the dust deposition and dust redispersion taken into account.

**3.** Method according to Claim 2, **characterized in that** the dust deposition is modelled by changing the volume fraction of the dust deposited.

**4.** Method according to Claim 1, **characterized in that** the feedstock is modelled as a Bingham-like fluid with a yield criterion, such as a Drucker-Pager, Von Mises or Tresca yield criterion.

**5.** Method according to one of Claims 1 to 4, **characterized in that** kinetic theorems are used in the modelling of the chemical and physical processes.

**6.** Method according to one of Claims 1 to 5, **characterized in that** states of equilibrium are taken into account in the modelling of the chemical and physical processes.

**7.** Method according to one of Claims 1 to 6, **characterized in that** the temperature dependence is taken into account in the modelling of the chemical and physical processes.

**8.** Method according to one of Claims 1 to 7, **characterized in that** the substances involved in the process are assigned to individual phases, such as for example the gas phase or at least one granular phase or at least one dust phase, in the process model.

**9.** Method according to one of Claims 1 to 8, **characterized in that** a granular phase is **characterized by** a specific grain size and by a specific raw material.

**10.** Method according to Claim 8 or 9, **characterized in that**, for each phase, a mass balance of this phase and the corresponding component balances are created.

**11.** Method according to Claim 10, **characterized in that** element fractions of specific chemical elements, for example in the form of mass fractions, are calculated from the component balances.

**12.** Method according to one of Claims 8 to 11, **characterized in that**, for the creation of an impulse balance and an energy balance, in each case a number of phases are combined into a group, the phases of one group having the same velocity, pressure and temperature field.

**13.** Method according to Claim 12, **characterized in that** the gas phase and the phase of the dust dispersed in the gas are assigned to a first group of gaseous phases and the granular phases and the phase of the dust deposited in the solid matter are assigned to a second group of solid phases, a corresponding impulse balance and an energy balance being created for each of these two groups.

**14.** Method according to one of Claims 10 to 13, **characterized in that** the reduction shaft (1) is discretized and the equations of the balances are solved by numerical methods, such as for example the method of finite differences, the method of finite elements, the method of finite volumes or the method of weighted residues.

**15.** Method according to one of Claims 1 to 14, **characterized in that** some of the chemical and/or physical properties of the substances involved in the process, in particular for the modelling of the chemical kinetics, the dust deposition and the behaviour of the solid matter, such as internal friction angles and cohesion, are determined from material tests.

**16.** Method according to one of Claims 1 to 15, **characterized in that**, to reduce the computing time by utilizing symmetries, the calculation of the process model is performed only for a three-dimensional subregion of the reduction shaft (1) (Figure 3).

**17.** Method according to one of Claims 1 to 16, **characterized in that** the geometry of the reduction shaft (1) is taken over by data transfer from a CAD program.

**18.** Method according to one of Claims 1 to 17, **characterized in that** the results of the calculations are displayed graphically, for example as a sectional representation on a computer screen.

**19.** Method according to one of Claims 1 to 18, **characterized in that** a suitable design of the reduction shaft is determined by repeated offline calculation of the process model with variation of the geometry of the reduction shaft (1).

**20.** Method according to one of Claims 1 to 18, **characterized in that** the reduction process is optimized by repeated offline calculation of the process model with variation of the process parameters and/or specific charge materials and/or the boundary conditions.

**21.** Method according to one of Claims 1 to 20, **characterized in that** the reduction process is controlled or optimized by online calculation of the process model with the current process parameters taken into account.

**22.** Method according to one of Claims 1 to 21, **characterized in that** the reduction process is optimized by maximizing the degree of metallization or achieving a prescribed degree of metallization of the reduced product with minimal consumption of raw material and/or energy.

**Revendications**

**1.** Procédé de modélisation d'un procédé de réduction pour des matériaux d'utilisation (3) en morceaux, contenant du fer, se présentant sous la forme d'une masse en vrac dans un sas de réduction (1), auquel on amène du gaz de réduction (9), par exemple venant d'un gazéificateur à fusion (6), sachant qu'un produit (13) ayant été réduit, solide, par exemple une éponge de fer, pour la fabrication de fer brut liquide ou des produits précurseurs d'acier (23) liquides, est prélevé du sas de réduction (1), le sas de réduction (1) étant modélisé spatialement, de façon bi- ou tridimensionnelle, et le procédé de réduction étant décrit à l'aide d'un modèle de processus mathématicophysico-chimique, sachant que, dans le modèle de processus, est utilisée une loi de matériau non linéaire, pour la masse en vrac des solides, la loi de matériau non linéaire décrivant la relation non linéaire intervenant entre le tenseur des contraintes et les gradients de vitesse de l'écoulement, de sorte que l'on puisse appréhender des phénomènes, tels que les cône de talutage ou les zones mortes.

**2.** Procédé selon la revendication 1, **caractérisé en ce que** le modèle de processus est établi en prenant en considération les dépositions de poussières et les dispersions de poussières.

**3.** Procédé selon la revendication 2, **caractérisé en ce que** la déposition de poussières est modélisée par modification de la proportion volumique de la poussière s'étant déposée.

**4.** Procédé selon la revendication 1, **caractérisé en ce que** la masse en vrac est modélisée en tant que fluide à analogie de Bingham, avec un critère d'élasticité, tel qu'un critère de Drucker-Prager, Von Mises ou Tresca.

**5.** Procédé selon l'une des revendications 1 à 4, **caractérisé en ce que** concernant la modélisation des processus chimiques et physiques, on utilise des équations cinétiques.

**6.** Procédé selon l'une des revendications 1 à 5, **caractérisé en ce que**, lors de la modélisation des processus chimiques et physiques, on prend en considération les états d'équilibre.

**7.** Procédé selon l'une des revendications 1 à 6, **caractérisé en ce que**, lors de la modélisation des processus chimiques et physiques, on prend en considération la dépendance envers la température.

**8.** Procédé selon l'une des revendications 1 à 7, **caractérisé en ce que** les substances ayant participé au processus sont associées, dans le modèle de processus, à différentes phases, telles que par exemple la phase gazeuse ou au moins une phase granulaire ou au moins une phase pulvérulente.

**9.** Procédé selon l'une des revendications 1 à 8, **caractérisé en ce qu'**une phase granulaire est **caractérisée par** une taille de grain déterminée et par un matière première déterminée.

**10.** Procédé selon la revendication 8 ou 9, **caractérisé en ce que** pour chaque phase, on établit un bilan de masse de cette phase et les bilans de composants correspondants.

**11.** Procédé selon la revendication 10, **caractérisé en ce que** des proportions élémentaires d'éléments chimiques déterminés, par exemple se présentant sous la forme de proportions massiques, sont calculées à partir des bilans de composants.

**12.** Procédé selon l'une des revendications 8 à 11, **caractérisé en ce que** pour établir un bilan d'impulsion et un bilan énergétique, on regroupe chaque fois plusieurs phases en un groupe, les phases d'un groupe présentant le même champ de vitesses, de pressions et de températures.

**13.** Procédé selon la revendication 12, **caractérisé en ce que** la phase gazeuse et la phase pulvérulente dispersée dans le gaz sont associées à un premier groupe de phases gazeuses et les phases granulaires, ainsi que la phase pulvérulente déposée dans le solide, sont associées à un deuxième groupe de phases solides, sachant que, pour ces deux groupes, on établit un bilan d'impulsion et un bilan énergétique correspondants.

**14.** Procédé selon l'une des revendications 10 à 13, **caractérisé en ce que** le sas de réduction (1) est discrétisé et les bilans sont résolus avec des méthodes numériques, telles que, par exemple, des méthodes des différences finies, la méthode des éléments finis, la méthode des volumes finis ou des méthodes à résidus pondérés.

**15.** Procédé selon l'une des revendications 1 à 14, **caractérisé en ce qu'**une partie des propriétés chimiques et/ou physiques des substances participant au processus, en particulier pour la modélisation de la cinétique chimique, de la déposition de poussières et du comportement des solides, tel que l'angle de friction et la cohésion, est déterminée à partir de tests pratiqués sur le matériau.

**16.** Procédé selon l'une des revendications 1 à 15, **caractérisé en ce que**, pour réduire le temps de calcul par exploitation des symétries, le calcul du modèle de processus n'est effectué que pour une zone partielle tridimensionnelle du sas de réduction (1) (Fig. 3).

**17.** Procédé selon l'une des revendications 1 à 16, **caractérisé en ce que** la géométrie du sas de réduction (1) est prise en considération, par un transfert de données issues d'un programme de conception assistée par ordinateur (CAD).

**18.** Procédé selon l'une des revendications 1 à 17, **caractérisé en ce que** les résultats des calculs sont représentés de façon graphique, par exemple sous forme de représentation en coupe, sur un écran d'ordinateur.

**19.** Procédé selon l'une des revendications 1 à 18, **caractérisé en ce que**, par le biais d'une répétition du calcul hors-ligne du modèle de processus, accompagnée d'une variation de la géométrie du sas de réduction (1), on détermine une conception appropriée du sas de réduction.

**20.** Procédé selon l'une des revendications 1 à 18, **caractérisé en ce que**, par une répétition du calcul hors-ligne du modèle de processus, par le biais d'une variation des paramètres de processus et/ou de certains matériaux utilisés et/ou des conditions aux limites, on optimise le procédé de réduction.

21. Procédé selon l'une des revendications 1 à 20, **caractérisé en ce que**, au moyen d'un calcul hors-ligne du modèle de processus, en prenant en considération les paramètres de processus réels, on commande, respectivement on optimise le procédé de réduction.

22. Procédé selon l'une des revendications 1 à 21, **caractérisé en ce que** l'optimisation du procédé de réduction, en cas de consommation minimale de matière première et/ou d'énergie, est effectuée en rendant maximal le degré de métallisation, ou en atteignant un degré de métallisation prédéterminé de la part du produit réduit.

Fig. 1

Fig. 2

Fig. 3